# EUROPÄISCHE PATENTANMELDUNG

(11) **EP 4 186 824 A1**
(43) Veröffentlichungstag der Anmeldung: **31.05.2023**
(21) Anmeldenummer: 22206206.9
(22) Anmeldetag: 08.11.2022
(51) Int. Cl.: B65G 1/137

(54) **LAGER- UND ENTNAHMESYSTEM SOWIE VERFAHREN ZUM BETREIBEN EINES LAGER- UND ENTNAHMESYSTEMS**

(30) Priorität: 30.11.2021 DE 102021213568
(71) Anmelder: Gebhardt Fördertechnik GmbH, D-74889 Sinsheim (DE)
(72) Erfinder: Gebhardt, Marco, 74889 Sinsheim (DE); Klopfenstein, Thomas, 67290 Wimmenau (FR)
(74) Vertreter: Ullrich & Naumann PartG mbB

(57) **Zusammenfassung**

Im Hinblick auf eine besonders hohe Leistung mit hoher Effizienz und mit konstruktiv einfachen Mitteln ist ein Lager- und Entnahmesystem mit einem Regallager (1) mit mindestens einem Lagerregal (2), mit mindestens einer Fördertechnik (3), wobei die mindestens eine Fördertechnik (3) zum Zuführen von Lagergut zu einem zwischen dem Regallager (1) und der mindestens einen Fördertechnik (3) realisierten Bereich vor dem mindestens einen Lagerregal (2) und zum Transportieren von Lagergut aus dem Bereich zu einem Bestimmungsort ausgebildet ist, und mit mindestens einer Stapeleinrichtung (4) zum Stapeln und Entstapeln von Lagergut angegeben, das dadurch gekennzeichnet ist, dass die mindestens eine Stapeleinrichtung (4) in dem Bereich vor dem mindestens einen Lagerregal (2) angeordnet ist. Des Weiteren ist ein Verfahren zum Betreiben eines derartigen Lager- und Entnahmesystems angegeben.

## Beschreibung

Die Erfindung betrifft ein Lager- und Entnahmesystem mit einem Regallager mit mindestens einem Lagerregal, mit mindestens einer Fördertechnik, wobei die mindestens eine Fördertechnik zum Zuführen von Lagergut zu einem zwischen dem Regallager und der mindestens einen Fördertechnik realisierten Bereich vor dem mindestens einen Lagerregal und zum Transportieren von Lagergut aus dem Bereich zu einem Bestimmungsort ausgebildet ist, und mit mindestens einer Stapeleinrichtung zum Stapeln und Entstapeln von Lagergut.

Des Weiteren betrifft die vorliegende Erfindung ein Verfahren zum Betreiben eines Lager- und Entnahmesystem, wobei das Lager- und Entnahmesystem ein Regallager mit mindestens einem Lagerregal, mindestens eine Fördertechnik, wobei die mindestens eine Fördertechnik zum Zuführen von Lagergut zu einem zwischen dem Regallager und der mindestens einen Fördertechnik realisierten Bereich vor dem mindestens einen Lagerregal und zum Transportieren von Lagergut aus dem Bereich zu einem Bestimmungsort ausgebildet ist, und mindestens eine Stapeleinrichtung zum Stapeln und Entstapeln von Lagergut aufweist.

Lager- und Entnahmesysteme in Form beispielsweise automatischer Kleinteilelager (beispielsweise Lager mit Regalbediengeräten RBG, mit Multi Level Shuttles MLS, mit One Level Shuttles, OLS, mit Klettershuttles oder mit automatischen Staplern, wobei RBG = kann fahren in x und heben in y und lagern in das Regal in z; MLS = kleines RBG, es können in einer Gasse mehrere davon übereinander fahren; OLS = kann fahren in x und lagern in das Regal in z; Klettershuttle = kann fahren in x und klettern in y und lagern in z; Stapler/Fahrerloses Transportsystem, FTS, mit Hub = Funktion eines RBG, fährt aber auf dem Hallenboden und nicht auf einer Schiene) bieten unter anderem den Vorteil, Behälter im Direktzugriff zu haben. Gegebenenfalls, bei mehrfachtiefer Lagerung, finden zuvor noch wenige Umlagerungen statt, aber es werden immer nur die Behälter ausgelagert, die benötigt werden. Die Lagerdichte in solchen Lagersystemen ist allerdings, im Vergleich zu anderen Lösungen (z.B. Blocklagersysteme), nicht die beste. Um dies zu optimieren, ist es denkbar, die Behälter gestapelt zu lagern. Das Stapeln und Entstapeln der Behälter erfolgt im Stand der Technik über dedizierte Stapelstationen und Entstapelstationen zwischen Loop(s), der bzw. die sich meistens vor den Lagergassen befinden, und Arbeitsplätzen, Senken, etc. Infolgedessen werden auch die unerwünschten Behälter auf dem bzw. den je nach individueller Situation sehr weitläufigen Loops gefördert. Dies hat aber Auswirkungen auf die Auslegung des bzw. der Loops. Durch das Fördern beispielsweise des doppelten Gewichts bei beispielsweise einem 2er-Stapel reduziert sich meist die Loop-Kapazität und der Loop-Durchsatz, da dann üblicherweise die Fördergeschwindigkeit reduziert werden muss, Zonen/Stellplätze größer gestaltet werden müssen und sich somit deren Anzahl reduziert. Zudem sind die beteiligten Komponenten stärker beansprucht und somit verschleißanfälliger. Werden die Stapel dann entstapelt, fahren mehr Fördergüter als notwendig auf den Verbindungsstrecken der verschiedenen Prozessschritte. Die Leistung des Gesamtsystems geht zurück und es kommt u.U. zu Staus und Deadlocks.

Die Lagerung gestapelter Behälter mit beispielsweise einem RBG ist ebenfalls aus dem Stand der Technik bekannt. Allerdings findet dabei eine Entstapelung nach Stand der Technik nicht direkt vor einer Lagergasse statt, sondern entfernt im Logistiksystem an einer meist zentralen Position auf der Fördertechnik. Dazu notwendige Stapelgerät sind ebenso bekannt.

Für hohe Leistungen sind aufwendige Stapelgeräte bekannt, die gleichzeitig mehrere Behälter greifen und vereinzeln können. Benötigt werden diese oft beim Depalettieren von Behältern, die für den LKW-Transport auf Europaletten gelagert werden. Oft werden vier Behälter zu je 600 * 400 mm auf eine Europalette von 1200 * 800 mm gestellt. Europaletten können gut von einem Stapler in einen und aus einem LKW transportiert werden. Diese Hochleistungs-Depalettiergeräte werden meist zentral, z.B. im Wareneingang, eingesetzt.

Oft werden Behälter nach dem Handling im Lager - beispielsweise auf und mit einem Loop, am Arbeitsplatz oder in einer Lagergasse - im Warenausgang gestapelt, um einen Abtransport im LKW platzsparend zu gestalten. Das Stapeln erfolgt meist als letzter Schritt in der Intralogistik, z.B. um Supermärkte filialgerecht mit LKWs zu versorgen.

Das übliche Handling mit dem Bedarf eines schnellen Direktzugriffs auf einzelne Behälter führt häufig zu einer nicht sehr hohen Lagerdichte im Regallager der bekannten Lager- und Entnahmesysteme.

Der vorliegenden Erfindung liegt die Aufgabe zugrunde, ein Lager- und Entnahmesystem sowie ein Verfahren zum Betreiben eines Lager- und Entnahmesystems anzugeben, wonach eine besonders hohe Kapazität oder Lagerdichte mit hoher Effizienz und mit konstruktiv einfachen Mitteln ermöglicht ist.

Erfindungsgemäß wird die voranstehende Aufgabe durch ein Lager- und Entnahmesystem mit den Merkmalen des Anspruchs 1 sowie durch ein Verfahren zum Betreiben eines Lager- und Entnahmesystems mit den Merkmalen des Anspruchs 15 gelöst.

Danach ist das Lager- und Entnahmesystem gemäß Anspruch 1 derart ausgestaltet und weitergebildet, dass die mindestens eine Stapeleinrichtung in dem Bereich vor dem mindestens einen Lagerregal angeordnet ist.

Des Weiteren ist das Verfahren zum Betreiben eines Lager- und Entnahmesystems gemäß Anspruch 15 derart ausgestaltet und weitergebildet, dass die mindestens eine Stapeleinrichtung in dem Bereich vor dem mindestens einen Lagerregal angeordnet wird, sodass ein Stapeln und Entstapeln von Lagergut in dem Bereich ermöglicht ist.

In erfindungsgemäßer Weise ist zunächst erkannt worden, dass durch geschickte Anordnung der mindestens einen Stapeleinrichtung die voranstehende Aufgabe auf überraschend einfache Weise gelöst wird. Hierzu ist in weiter erfindungsgemäßer Weise die mindestens eine Stapeleinrichtung ganz konkret in dem Bereich vor dem mindestens einen Lagerregal angeordnet. Dies ermöglicht ein Stapeln und Entstapein von Lagergut direkt in diesem Bereich, sodass es vermieden werden kann, Lagergut gestapelt mit der Fördertechnik zu transportieren und damit die Leistungsfähigkeit und Geschwindigkeit der Fördertechnik zu reduzieren. Andererseits kann durch das Stapeln in diesem Bereich das Lagergut mit hoher Dichte und damit sehr effizient in dem Regallager untergebracht und gelagert werden. Mit dem erfindungsgemäßen Lager- und Entnahmesystem und Verfahren zum Betreiben eines derartigen Lager- und Entnahmesystems ist ein gezieltes Lagern von gestapeltem Lagergut oder gestapelten Behältern in einer Lagergasse und ein direktes Vereinzeln vor der Übergabe von der Lagergasse auf die Fördertechnik möglich. Damit lassen sich die Vorteile einer hohen Lagerdichte in der Lagergasse, eines schnellen Direktzugriffs auf einzelnes Lagergut oder einzelne Behälter und einer reduzierten Gewichtsbelastung der Fördertechnik kombinieren, da einzelnes Lagergut oder einzelne Behälter nicht mehr im Stapel auf der Fördertechnik angeordnet werden, Lagergutstapel oder Behälterstapel auf der Fördertechnik nicht mehr kippen können und eine zeitaufwendige und staubildende zentrale Entstapelung nicht mehr notwendig ist.

Folglich sind mit dem erfindungsgemäßen Lager- und Entnahmesystem und dem erfindungsgemäßen Verfahren ein Lager- und Entnahmesystem und ein Verfahren bereitgestellt, wonach eine besonders hohe Kapazität oder Lagerdichte mit hoher Effizienz und mit konstruktiv einfachen Mitteln ermöglicht ist.

Ganz grundsätzlich ist bei der vorliegenden Erfindung der Ort der Anordnung der mindestens einen Stapeleinrichtung von besonderer Bedeutung. Dabei kann das Lagergut stapelbare Behälter aufweisen oder in stapelbaren Behältern angeordnet sein, sodass ein Stapeln von Lagergut ein Stapeln von Behältern umfassen kann. In jedem Fall ist mit der vorliegenden Erfindung eine Lagerung von gestapeltem Lagergut oder gestapelten Behältern möglich, sodass eine hohe Lagerdichte erreicht werden kann. Ein solches Stapeln von Lagergut oder Behältern kann hierbei vor der Einbringung des Lagerguts oder der Behälter in das mindestens eine Lagerregal erfolgen. Bei Ausführungsbeispielen der vorliegenden Erfindung kann der vor dem mindestens einen Lagerregal realisierte Bereich teilweise in ein Lagerregal hineinreichen, sodass ein Stapeln und Entstapeln von Lagergut gegebenenfalls alternativ oder zusätzlich in dem in das Lagerregal hineinreichenden Teil des Bereichs erfolgen kann. Hierdurch kann ein besonders kompaktes Lager- und Entnahmesystem realisiert werden.

Als die mindestens eine Fördertechnik können unterschiedliche Fördereinrichtungen dienen, die unter Berücksichtigung des jeweiligen Anwendungsfalls ausgewählt werden können. Beispielsweise kann die Fördertechnik ein Fördertechnikloop (= Fördertechnik mit Rollenförderer, Kettenförderer, Gliederbandförderer, Gurtförderer, Ein- und Ausschleusevorrichtungen und/oder Heber usw...) und/oder ein fahrerloses Transportsystem und/oder einen Sorter aufweisen.

Im Hinblick auf eine besonders hohe Effizienz kann das Lager- und Entnahmesystem eine in dem Bereich gebildete Einlagerungsbahn für Lagergut und eine in dem Bereich gebildete Auslagerungsbahn für Lagergut aufweisen, wobei die mindestens eine Stapeleinrichtung zwischen oder in der Umgebung der Einlagerungsbahn und der Auslagerungsbahn angeordnet oder in die Einlagerungsbahn und/oder in die Auslagerungsbahn integriert sein kann. Durch eine Anordnung zwischen oder in der Umgebung der Einlagerungsbahn und der Auslagerungsbahn oder eine Integration in die Einlagerungsbahn und/oder in die Auslagerungsbahn ist ein besonders schneller und effektiver Zugriff der mindestens einen Stapeleinrichtung auf Lagergut ermöglicht. Sowohl ein Stapeln für ein Einlagern im Lagerregal als auch ein Entstapeln für ein Zuführen des Lagerguts zur Fördertechnik ist auf einfache und schnelle Weise ermöglicht.

Im Konkreten kann die mindestens eine Stapeleinrichtung zur Durchführung eines Stapelns von Lagergut auf der Einlagerungsbahn und/oder eines Entstapelns von Lagergut auf der Auslagerungsbahn ausgebildet sein. Hierbei kann die mindestens eine Stapeleinrichtung auf unterschiedliche Weise mit hoher Flexibilität der Anpassung an individuelle Gegebenheiten realisiert werden.

Zum sicheren und effizienten Stapeln und Entstapeln von Lagergut kann die mindestens eine Stapeleinrichtung eine Stapelstation auf der Einlagerungsbahn und eine Entstapelstation auf der Auslagerungsbahn aufweisen. Die Stapelstation und die Entstapelstation können unabhängig voneinander betrieben oder gesteuert werden, sodass der Vorgang des Stapelns und der Vorgang des Entstapelns unabhängig voneinander und in Abhängigkeit von individuellen Erfordernissen auf der Einlagerungsbahn und/oder der Auslagerungsbahn erfolgen können.

In konstruktiv besonders einfacher Weise können die Stapelstation und die Entstapelstation als separate Einrichtungen realisiert sein. Dies ermöglicht einen unkomplizierten Austausch bei beispielsweise einem Defekt einer der beiden Einrichtungen.

Im Hinblick auf eine schnelle Verteilung von Lagergut kann die mindestens eine Stapeleinrichtung eine Verbindungseinrichtung, vorzugsweise eine Quer-Verbindungseinrichtung, zwischen der Stapelstation und der Entstapelstation oder zwischen der Einlagerungsbahn und der Auslagerungsbahn aufweisen. Eine solche Verbindungseinrichtung ermöglicht eine schnelle Wiedereinlagerung eines ausgelagerten Lagerguts, falls dieses nicht benötigt wird und lediglich in einem Stapel mit einem benötigten Lagergut ausgelagert worden ist und daher nicht auf die mindestens eine Fördertechnik befördert werden muss. In diesem Fall kann das nicht benötigte Lagergut von der Entstapelstation über die Verbindungseinrichtung gleich wieder zur Stapelstation befördert werden, um wieder eingelagert zu werden. Insoweit ist über die Verbindungseinrichtung eine Verbindung zwischen Einlagerungsbahn und Auslagerungsbahn geschaffen. Insbesondere im Falle einer parallel zueinander verlaufenden Anordnung von Einlagerungsbahn und Auslagerungsbahn kann die Verbindungseinrichtung eine Quer-Verbindungseinrichtung sein, die quer zur Einlagerungsbahn und/oder Auslagerungsbahn verläuft.

Zur sicheren und effektiven Bewegung eines Lagerguts zwischen Auslagerungsbahn und Einlagerungsbahn kann die Verbindungseinrichtung ein Fördermittel aufweisen. Das Fördermittel kann vorzugsweise mit einem 90°-Umsetzer ausgestattet sein, um ein zu beförderndes Lagergut immer in die gleiche Förderrichtung zu positionieren, d. h. beispielsweise von einem Fördern entlang der Auslagerungsbahn zu einem um 90° gedrehten Fördern entlang der Verbindungseinrichtung. In entsprechender Weise kann mit einem geeigneten weiteren 90°-Umsetzer ein Drehen des Lagerguts um weitere 90° erfolgen, um das Lagergut für ein Fördern entlang der Einlagerungsbahn zum Regallager hin zu positionieren. Alternativ kann das Fördermittel mit einer Kurve um 180° ausgestattet sein, sodass das Lagergut um 180° gedreht werden kann. Dabei kann das Fördermittel auf konstruktiv einfache Weise eine Rollenbahn aufweisen.

Bei einer alternativen und besonders effizienten Ausgestaltung können die Stapelstation und die Entstapelstation als kombinierte, insbesondere integral ausgebildete, Stapel/Entstapeleinheit realisiert sein, wobei die Stapel/Entstapeleinheit vorzugsweise eine Bewegungseinrichtung, beispielsweise Linearbewegungseinrichtung, zum Bewegen von Lagergut zwischen der Einlagerungsbahn und der Auslagerungsbahn aufweist. Eine solche kombinierte Stapel/Entstapeleinheit ist konstruktiv üblicherweise aufwendiger als eine Ausgestaltung der Stapelstation und der Entstapelstation als separate Einrichtungen. Allerdings lassen sich mit solch einer kombinierten Stapel/Entstapeleinheit Kosteneinsparungen im Stahlbau realisieren, die den Mehraufwand bei der Realisierung der kombinierten Stapel/Entstapeleinheit überwiegen. Bei einem Ausführungsbeispiel einer solchen Stapel/Entstapeleinheit lässt sich Lagergut beispielsweise von oben greifen und beispielsweise von einer Auslagerungsbahn direkt auf eine Einlagerungsbahn positionieren, um wieder eingelagert zu werden. Hierbei kann eine geeignete Bewegungseinrichtung für Lagergut wie beispielsweise eine Linearbewegungseinrichtung zum Einsatz kommen. Nicht benötigtes Lagergut oder nicht benötigte Behälter müssen dabei nur einmal mittels der Stapeleinrichtung gehandhabt werden, was eine hohe Effizienz im Betrieb bedeutet.

Im Hinblick auf ein einfaches und effizientes Handhaben von Lagergut kann der mindestens einen Stapeleinrichtung mindestens ein zum zwischenzeitlichen Parken eines Lagerguts dienender Stellplatz für Lagergut zugeordnet sein, wobei vorzugsweise mindestens ein Stellplatz für Lagergut im Bereich einer Stapelstation und/oder mindestens ein Stellplatz für Lagergut im Bereich einer Entstapelstation realisiert sind oder ist. Ein solcher Stellplatz oder auch Parkplatz für Lagergut kann je nach Erfordernis genutzt werden, um beispielsweise eine gewünschte Stapelreihenfolge oder Reihenfolge der Zuführung von Lagergut zur Fördertechnik zu realisieren. Eine Realisierung mindestens eines solchen Stellplatzes im Bereich einer Stapelstation und/oder einer Entstapelstation ergibt besonders kurze Wege für ein zwischenzeitliches Parken eines Lagerguts, wobei ein Zugriff durch die Stapelstation und/oder Entstapelstation zum auf einem Stellplatz positionierten Lagergut üblicherweise sehr einfach ist.

Alternativ oder zusätzlich zu einem solchen Stellplatz kann der mindestens einen Stapeleinrichtung mindestens eine Pufferbahn für Lagergut zugeordnet sein. Auch auf einer solchen Pufferbahn kann Lagergut quasi zwischengelagert werden, beispielsweise bevor es an eine Fördertechnik übergeben wird.

In besonders effektiver Weise kann mindestens eine Pufferbahn für Lagergut zwischen der mindestens einen Stapeleinrichtung und der Fördertechnik realisiert sein, um ein Zuführen von Lagergut zur Fördertechnik oder das Zuführen von einer Fördertechnik zur Stapeleinrichtung zu puffern oder zu steuern.

Bei einem konkreten, besonders effektiven Ausführungsbeispiel können oder kann mindestens eine Pufferbahn für Lagergut zwischen einer Einlagerungsbahn und der Fördertechnik und/oder mindestens eine Pufferbahn für Lagergut zwischen einer Auslagerungsbahn und der Fördertechnik realisiert sein. Hierbei kann auf effektive Weise ein Puffern oder Steuern von Lagergut in beide Richtungen, d. h. in Einlagerungsrichtung und in Auslagerungsrichtung erfolgen.

Im Konkreten kann die mindestens eine Stapeleinrichtung zwischen einer - zwischen zwei Lagerregalen und/oder vor oder neben dem mindestens einen Lagerregal gebildeten - Lagergasse und der mindestens einen Fördertechnik, vorzugsweise vor der Lagergasse, angeordnet sein, wobei vorzugsweise die mindestens eine Stapeleinrichtung zur lagergassenübergreifenden Arbeit ausgebildet ist. Je nach Anwendungsfall kann die mindestens eine Stapeleinrichtung an geeigneter Stelle zwischen Regallager und Fördertechnik positioniert sein. Falls beispielsweise mehrere Lagergassen und mehrere Einlagerungsbahnen und Auslagerungsbahnen realisiert sind, kann die mindestens eine Stapeleinrichtung derart realisiert und/oder angeordnet sein, dass sie auch mit mehreren, vorzugsweise benachbarten Einlagerungsbahnen zusammenarbeitet und auf diese Zugriff hat, wobei die mehreren Einlagerungsbahnen jeweils unterschiedlichen Lagergassen zugeordnet sein können.

In weiter konkreter Weise kann dem Regallager ein Mittel - beispielsweise ein Regalbediengerät, eine Hebeeinrichtung oder ein Shuttle - zum Einlagern und/oder Auslagern von gestapeltem oder ungestapeltem Lagergut in das mindestens eine und aus dem mindestens einen Lagerregal zugeordnet sein, wobei vorzugsweise das Mittel in dem Regallager, in einer Lagergasse oder zwischen dem Regallager und dem Bereich angeordnet ist und/oder arbeitet. Beispielsweise kann mit dem Mittel Lagergut, das mittels der Stapeleinrichtung gestapelt worden ist, in das Regallager eingelagert werden. Alternativ oder zusätzlich hierzu kann mit dem Mittel gestapeltes Lagergut aus dem Regallager entnommen werden, damit das gestapelte Lagergut - beispielsweise über einer Auslagerungsbahn - der Stapeleinrichtung zum Entstapeln zugeführt werden kann.

Bei der Stapelbildung kann es ferner notwendig sein, das Gewicht des Stapels zu erfassen und dann gegebenenfalls nur ein maximales Stapelgewicht zuzulassen. Hierzu kann das Lager- und Entnahmesystem ein Mittel zur Gewichtserfassung von Lagergut oder gestapeltem Lagergut aufweisen. Das Mittel kann beispielsweise einer Einlagerungsbahn und/oder einer Auslagerungsbahn zugeordnet oder in eine Einlagerungsbahn und/oder eine Auslagerungsbahn integriert sein. Aus dem Stand der Technik ist es bekannt das Gewicht eines einzelnen Behälters oder einer Palette durch Waagen in der Fördertechnik und durch die Hinterlegung des Gewichts in einer zentralen Datenbank (Lagerverwaltungssystem, LVS) automatisch zu erfassen. Bei der Stapelbildung kann vor der Einlagerung die Masse des Stapels durch Summieren der Gewichte der Behälter im Stapel erfasst werden. Je nach Regalauslegung und je nach Auslegung des Lastaufnahmemittels, gibt es ein maximales Gewicht für einen Stapel. Ein zu hohes Stapelgewicht könnte das Lastaufnahmemittel nicht mehr problemlos bewegen, zudem könnte es die zulässige Fachlast im Regal überschreiten. Grundsätzlich ist die Fachlast im Regal bei Stapeln kritischer als bei der herkömmlichen Lagerung einzelner Behälter, da der Stapel wesentlich höhere Kräfte lokal in das Regal einleitet. Bei der Auslegung des Systems ist es nicht immer sinnvoll, das Regalfach und das Lastaufnahmemittel auf die Summe des maximalen Gewichts der einzelnen Behälter auszulegen. Häufig ist aus Erfahrungen bekannt, dass nur wenige Behälter das maximale Gewicht erreichen. Damit kann es vorteilhaft sein das System so auszulegen, dass ein Stapel nur z.B. 75% des maximal möglichen Stapelgewichts aufweisen darf. In der Praxis kann eine Lagersteuerung einen Stapel ausschließen, der nur aus sehr schweren Behältern besteht - also im Beispiel von zuvor mit einem Stapelgewicht >75%. Falls der unwahrscheinliche Fall auftritt, dass z.B. zwei Behälter gestapelt werden sollen, die im Stapel zu schwer wären, kann ein Behälter auf dem Pufferplatz gelagert werden, bis ein leichterer dazu passender Behälter als Partner verfügbar ist. Da in der vorliegenden Erfindung viele Behälter direkt nach dem Auslagern wieder eingelagert werden können (Querverbindung), ohne an einem Arbeitsplatz bearbeitet zu werden, ist es nicht notwendig diese erneut zu wiegen. Alternativ könnte der zu diesem Zeitpunkt zu schwere Behälter auch auf den Loop und dann in einer anderen Gasse oder zu einem späteren Zeitpunkt in die gleiche Gasse eingelagert werden. Üblicherweise passiert dieser im Verlauf des Loops eine Waage, so dass das Gewicht erneut geprüft werden könnte.

Gemäß einem Ausführungsbeispiel der vorliegenden Erfindung kann das Lagerund Entnahmesystem eine Stapeleinrichtung in Form einer Stapel-Entstapelstation zwischen dem Regallager und einer Lagervorzone aufweisen, wobei diese Lagervorzone den Bereich zwischen dem Regallager und der mindestens einen Fördertechnik aufweisen kann.

Ausführungsbeispiele der Erfindung umfassen beispielsweise ein Stapeln von Behältern vor einer Einlagerung in ein automatisches Kleinteilelager und ein Entstapeln von Behältern vor einer Auslagerung und einem weiteren Transport über beispielsweise die mindestens eine Fördertechnik, die ein Fördertechnikloop oder ein fahrerloses Transportsystem, FTS, oder einen Sorter aufweisen kann.

Im Folgenden werden vorteilhafte Aspekte von Ausführungsbeispielen der vorliegenden Erfindung beispielhaft anhand als Behälter ausgebildetem Lagergut erläutert, wobei sich diese vorteilhaften Aspekte in gleicher Weise auch bei anderem stapelbaren Lagergut ergeben. Insoweit wird im Folgenden der Begriff Behälter synonym für jegliches geeignetes stapelbares Lagergut verwendet:
- Es ergibt sich eine Verbesserung der Lagerdichte durch Lagerung gestapelter Behälter.
   ∘ Bei einem RBG-Lager kann die Anzahl der Stellplätze um ca. 10 bis 15% erhöht werden, bei zwei Behältern je Stapel
   ∘ Bei einem OLS-Lager kann die Anzahl der Stellplätze um ca. 10 bis 25% erhöht werden, bei zwei Behältern je Stapel
- Es tritt keine Reduzierung des Durchsatzes der Lagervorzone auf: Auf der Fördertechnik, beispielsweise einem Loop, werden keine Behälterstapel gefördert, da diese bereits zwischen Lager und Fördertechnik oder Loop entstapelt/vereinzelt werden. Daraus folgen weniger Behälter auf den Verbindungsstrecken/Fördertechniken/Loops, es werden also nicht unnötig nicht benötigte Behälter auf der Fördertechnik oder auf dem Loop bewegt, bevor sie wieder eingelagert werden.
- Dadurch ergeben sich auch keine technischen Einschränkungen der Lagervorzone aufgrund gestapelter Behälter hinsichtlich mechanischer Auslegung, Steuerung und/oder Verschleiß der Lagervorzone.
- Es ergibt sich keine Reduzierung des Durchsatzes des automatischen Kleinteilelagers. RBG, MLS oder OLS können gestapelte Behälter genauso wie beim Stand der Technik behandeln.
- Besonders interessant bei OLS-Lager: Durch Reduzierung der Anzahl der Lagerebenen werden weniger Fachboden/Tiefauflagen, Schienen, Übergabeplätze und auch weniger OLS sowie Schleifleitungen und/oder Batterieladestationen benötigt. Die Kosten werden somit stark reduziert sowie auch die Störungsanfälligkeit durch die geringere Anzahl an Komponenten. Bei OLS-Shuttles steigt die Auslastung je Shuttle, da im Gesamtsystem weniger Shuttles sind. Beispiel: Heute hat ein Shuttle im Captive-Lager z.B. eine Auslastung von 25%, durch die Reduzierung der Anzahl Shuttles steigt die Auslastung im Verhältnis an.
- Stapel können auch mehrfachtief gelagert werden.
- Die mittlere Zugriffszeit auf einen einzelnen Behälter ist geringer als in automatischen Blocklagern, da kein vielfaches Umlagern notwendig ist, um an den tief gelagerten Behälter - tief kann in y vertikal in einem Blocklager oder in z in einem herkömmlichen Lager bedeuten - zu gelangen.

Folglich ist es möglich, einem Kunden für weniger Investment ein Lager mit mehr Stellplätzen anzubieten.

Weitere Ausführungs- und/oder Ergänzungsmöglichkeiten:
- Es kann ein Trennen/Abstapeln von Behältern durch die Behältergeometrie erfolgen, ohne die Behälter aktiv zu greifen, z.B. durch Nuten oder Rücksprünge im Behälter und entsprechende Fördermittel, die dort eingreifen und eine Relativbewegung zweier Behälter auslösen. Ein Stapeln kann durch synchrones "Aufeinanderfahren" von unterem und oberem Behälter, z.B. über einen Gurtförderer/Zahnriemenförderer mit "Messerkante", erfolgen.
- Es kann ein Entstapeln erfolgen, indem der obere Behälter gehalten und leicht angehoben wird, während der untere Behälter weiterfährt. Eine Unterstützung kann den oberen Behälter sanft absenken.
- Es können Zentriereinrichtungen realisiert werden, die nicht sauber aufeinander eingerastete Behälter ineinander zentrieren oder ausrichten, beispielsweise mit Behältern mit Stapelrand.
- Die Stapelstation oder Stapeleinrichtung könnte Behälter ohne Stapelrand mit Hilfsmitteln wie Klammern, Bändern etc. zusammenfügen.
- In der Fördertechnik können Sperren verbaut werden, um die Behälter wiederholgenau für den Stapel-/Entstapelvorgang zu positionieren. Zusätzlich können für denselben Zweck seitliche Zentrierungen angebracht werden, die aktiv oder passiv arbeiten können.
- Im Stapelvorgang können Behälter gedreht werden, um die Ausrichtung zu ändern, beispielsweise Behälter drehen, um einen einseitigen Barcode an eine bestimmte Stelle zu bringen. Der untere Behälter kann durch eine Drehstation in der Fördertechnik gedreht werden.
- Anstatt eines Portal(-roboters) oder Stapelgeräts kann ein Industrieroboter, z.B. ein Gelenkarmroboter, zum Einsatz kommen.
- Ein Greifen des Behälters kann von oben in Aussparungen im Behälter oder von der Seite je nach Ausgestaltung des Behälters erfolgen.
- Weiter Optional: Es kann ein Puffer oder Parkplatz oder Stellplatz zwischen Ausund Einlagerungsbahn realisiert werden, wenn ein Behälter nicht gleich wieder aufgestapelt werden kann oder soll. Der Behälter verweilt dann dort oder auf einer Pufferbahn, bis wieder Stapel gebildet werden können. Bei Verwendung eines Industrieroboters als Stapelgerät oder Stapeleinrichtung können die Behälterpuffer dreidimensional im Bereich der E-/A Bahnen (= Ein - und Auslagerungsbahn) angebracht werden. Der Puffer kann auch genutzt werden, um Behälter zu sequenzieren oder Behälter mit hoher Zugriffswahrscheinlichkeit nicht übers Lager fahren zu müssen.
- Bei mehreren übereinander liegenden Einlagerungs-/Auslagerungsbahnen, E-/A Bahnen, kann eine Stapeleinrichtung oder ein Industrieroboter mehrere E-/A Bahnen je Gasse bedienen.
- Es können abweichend zur Darstellung in den unten beschriebenen Abbildungen auch zwei nicht benötigte Behälter von der Auslagerungsbahn ein Paar auf der Einlagerungsbahn bilden. Entweder direkt oder durch Nutzung von Pufferplätzen zwischen den Bahnen.
- Die Höhe der Stapel ist nicht begrenzt. Es können auch drei oder mehr Behälter gestapelt sein, z.B. bei niedrigen Behältern. Insbesondere in diesem Fall können auch mehrere solcher Stationen oder Stapeleinrichtungen - hintereinander angeordnet - sinnvoll sein.
- Es kann eine Sensorik realisiert sein, die die Qualität des Stapelvorgangs erfasst und ggf. Korrekturen auslöst.
- Eine Anwesenheit von Behältern auf den möglichen Stell-, Park- und Pufferplätzen kann durch eine Sensorik erfasst werden.
- Eine Stapeleinrichtung oder ein Stapelgerät/Roboter kann eine Kamera zur Positionierung eines Greifers aufweisen.
- Stapel können aus verschieden hohen Behältern gebildet werden.
- Wenn eine zusätzliche Querverbindung zwischen Auslagerungs- und Einlagerungsbahn realisiert ist können Einlagerungsstapel wieder zu Auslagerungsstapel werden. Dadurch können Stapel auch umsortiert werden.
- Ein Umsortieren von Stapeln kann nach Zugriffswahrscheinlichkeit der Behälter erfolgen.
- Es müssen nicht zwingend Stapel eingelagert werden. Super A Artikel (also Artikel im Lager, auf die vergleichsweise sehr häufig zugegriffen wird) könnten auch einzeln gelagert werden. Bei MLS und RBG - Geräte mit eigenem Hub - kann das Regal Fächer für Stapel und einzelne Behälter platzoptimiert aufweisen. Bei OLS ist dies auch möglich, aber nicht platzoptimiert, der obere Stapelbehälter muss hier sozusagen leer bleiben.
- Eine ABC-Verteilung muss angepasst werden. Merkmale sind nicht mehr nur die Entfernung von Ein-/Auslagerpunkt in Gassenrichtung und quer dazu (Lagertiefe) sondern auch noch, wo der Behälter im Stapel ist. Ist ein unterer Behälter schneller auszulagern als ein oberer Behälter? Ist ein Behälter eventuell nicht gestapelt im Lager vorhanden? Es ergibt sich eine 3D-ABC-Verteilung. Je nach Ausführung der Stapel-/Entstapelstation ist der untere oder obere Behälter schneller auszulagern, somit ergibt sich eine weitere zu berücksichtigende Dimension in der ABC-Verteilung. Zudem können auch Behälter nicht gestapelt im Lager vorhanden sein, die noch schneller ausgelagert werden können.
- Stapelgeräte oder Stapeleinrichtungen können auch zusätzlich verwendet werden, um Deckel von Behältern zu nehmen, um den Zugriff zu erleichtern. Vor dem Einlagern wird der Deckel wieder aufgebracht, um verschmutzungsempfindliche Ware zu schützen.
- Barcode-Scanner können in den E- bzw. A-Bahnen realisiert werden, um ein Stapel-Entstapelergebnis (richtiger Behälter?) zu verifizieren oder um ein Stapelgerät oder eine Stapeleinrichtung anzusteuern.
- Ein Materialflussrechner/Lagerverwaltungssystem kann Pufferplätze, Pufferbahnen, Stellplätze und/oder Stapel-/Entstapelvorgänge verwalten.
- Je nach Behälterbedarf und Bedarfszeitpunkt können auch beide Behälter eines Stapels ausgelagert werden, wenn beide benötigt werden.
- Je nach Anordnung muss nicht die E-A-Bahn einer Gasse gemeinsam bedient werden. Wenn es geometrisch vorteilhaft ist, können auch gassenübergreifend Bahnen genutzt werden. Z.B., wenn die Verfahrwege für das Portal geringer und damit die mögliche Spielzeit/Leistung höher wäre. Es könnte also die E-Bahn einer Gasse 1 mit der A-Bahn einer Gasse 2 kombiniert werden.
- Ein Greifer des Stapelgeräts kann schwimmend gelagert sein, um keine hohe Positioniergenauigkeit beim Behälterpositionieren zu benötigen, beispielsweise beim Entstapeln. Beim Stapeln könnte der zusätzliche Freiheitsgrad auf die Maße des Stapelrands abgestimmt sein.

- Sollte bei einem Stapel ein Fehler festgestellt werden, beispielsweise Barcodes passen nicht oder Stapel ist instabil, können die Stapel auch als Ganzes an einen Klärplatz gefahren werden.
- Es können mehrere Stapel gleichzeitig entstapelt oder gestapelt werden.
- Es kann mit einem umlaufenden Rad mit Stellantrieben ge- und entstapelt werden. Dabei ergibt sich eine hohe Leistung aufgrund eines damit realisierten Umlaufprinzips. Hier kann ein seitlicher Eingriff in den Behälter erfolgen.
- Bei Verwendung eines Industrieroboters kann ein Behälter während des Stapelvorgangs ausgekippt werden (Reste, Müll, etc.).

Ausführungsbeispiele des beanspruchten Lager- und Entnahmesystems können mit einem Materialflussrechner, MFR, und/oder einem Lagerverwaltungssystem, LVS, für eine geeignete Steuerung des Lager- und Entnahmesystems zusammenarbeiten.
- Bei unterteilten Behältern kann ein weiterer Faktor der Klassifizierung (ABC 3D) hinzukommen. Letztendlich ist eine Sortiermöglichkeit an den E/A Bahnen endlich, bevor es Leistungsauswirkungen hat. Umso höher der Stapel, umso komplexer ist die Situation, wenn es hier starke Zugriffsunterschiede der Behälter gibt. Es muss also nicht nur wie im Stand der Technik eine geeignete Position im Lager gefunden werden, sondern auch eine passende Behälterbildung mit dem Kriterium: welcher ist besser oben oder unten?
- Wenn eine harte Sequenz in Form einer Pickreihenfolge benötigt wird, sollte eine Strategie verwendet werden. Sortiert man an den E/A Bahnen oder im Loop?

Im Hinblick auf einen erforderlichen Brandschutz mit gegebenenfalls einer Sprinklerung können Behälter ausreichend Ablauflöcher haben, wobei Ablauflöcher für Löschwasser im Behälterboden meist nicht umsetzbar sind.

Des Weiteren kann eine Zugänglichkeit zu der mindestens einen Stapeleinrichtung auf unterschiedliche Weise realisiert werden. Falls der Platz zwischen Lagergassen zu eng für einen geeigneten Wartungszugang ist, ist es auch denkbar, die mindestens eine Stapeleinrichtung oder einzelne Stapelgeräte wie beispielsweise eine Stapelstation und eine Entstapelstation auf eine Bühne zu stellen, wobei hier ein Zugang von unten erfolgen kann. Alternativ hierzu kann ein Gitterrost über die mindestens eine Stapeleinrichtung gestellt werden, wobei ein Zugang von oben durch klappbare oder entnehmbare Gitterrostelemente gewährleistet werden kann.

Auch wenn in diesem Dokument meist von OLS die Rede ist, wird damit auch ein OLSX eingeschlossen, das Lagergassen horizontal wechseln kann. Auch bei OLSX Shuttles kann für eine Reduktion der Kosten ein Stapeln sinnvoll sein, es entfallen dabei zusätzlich teilweise die Querverbindungen - beispielsweise Fahrschienen und/oder Quergänge, z.B. aus Schienen oder vollflächig aus Blechen/Holzplatten - zwischen den Lagergassen, beispielsweise 50% aller Querverbindungen beim Stapeln von zwei Behältern. Beim OLSX gibt es oft keinen Loop, dennoch wäre der generelle Aufbau genau gleich, nur an die Stelle des Loops kann direkt der Arbeitsplatz platziert werden.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche und andererseits auf die nachfolgende Erläuterung bevorzugter Ausführungsbeispiele der erfindungsgemäßen Lehre anhand der Zeichnung zu verweisen. In Verbindung mit der Erläuterung der bevorzugten Ausführungsbeispiele anhand der Zeichnung werden auch im Allgemeinen bevorzugte Ausgestaltungen und Weiterbildungen der Lehre erläutert. In der Zeichnung zeigen
- Fig. 1: in einer schematischen Draufsicht ein Ausführungsbeispiel des erfindungsgemäßen Lager- und Entnahmesystems,
- Fig. 2: in einer schematischen Draufsicht ein weiteres Ausführungsbeispiel des erfindungsgemäßen Lager- und Entnahmesystems und
- Fig. 3 bis 11: in schematischen, perspektivischen Darstellungen ein Beispiel eines Betriebs eines Ausführungsbeispiels des erfindungsgemäßen Lager- und Entnahmesystems.

Im Folgenden werden Ausführungsbeispiele der Erfindung im Zusammenwirken mit Behältern erläutert. In gleicher Weise sind die Ausführungsbeispiele auch ganz allgemein für stapelbares Lagergut geeignet, sodass die Begriffe "Behälter" und "Lagergut" ohne irgendwelche Einschränkungen synonym verwendet werden.

Ausführungsbeispiele des erfindungsgemäßen Lager- und Entnahmesystems bieten eine Lösung zur Verbesserung der Lagerdichte von insbesondere automatischen Lagersystemen durch Lagerung gestapelter Behälter, ohne dass Auswirkungen auf der Lagervorzone vorliegen, wo die Behälter entstapelt sind. Dabei kann eine Anordnung von Stapel-Entstapelstationen zwischen Ein- und Auslagerungsbahnen und zwischen Lagergassen und Loop(s) erfolgen. Die Stapel-Entstapelstationen vor einer Lagergasse realisieren das Stapeln der Behälter auf der Einlagerungsbahn sowie das Entstapeln der Behälter auf der Auslagerungsbahn. Im Folgenden werden zwei Ausführungsbeispiele hierfür erläutert:
Das Lager- und Entnahmesystem umfasst ein Regallager 1 mit Lagerregalen 2 und einer Fördertechnik 3 in Form zweier Förderstrecken, die gemeinsam einen Loop bilden. Die Fördertechnik 3 dient zum Zuführen von Lagergut zu einem zwischen dem Regallager 1 und der Fördertechnik 3 realisierten Bereich vor den Lagerregalen 2 und zum Transportieren von Lagergut aus dem Bereich zu einem Bestimmungsort, beispielsweise ein Arbeitsplatz. Des Weiteren weist das Lager- und Entnahmesystem eine Stapeleinrichtung 4 zum Stapeln und Entstapeln von Lagergut auf, wobei die Stapeleinrichtung 4 in dem Bereich vor den Lagerregalen 2 angeordnet ist.

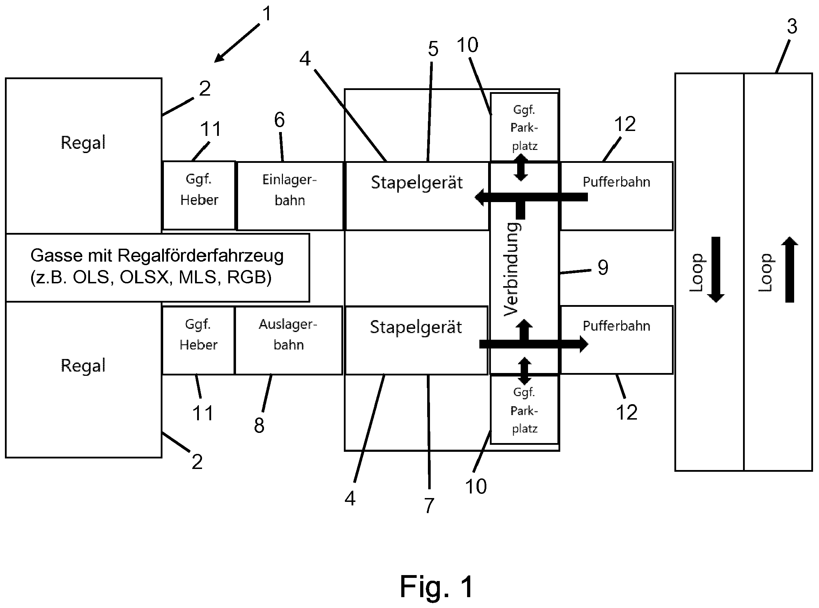

Dabei zeigt Fig. 1 in einer schematischen Draufsicht ein konkretes erstes Ausführungsbeispiel des erfindungsgemäßen Lager- und Entnahmesystems, wobei eine Stapelstation 5 der Stapeleinrichtung 4 auf einer Einlagerungsbahn 6 und eine Entstapelstation 7 auf einer Auslagerungsbahn 8 in Kombination mit einer Quer-Verbindungseinrichtung 9 realisiert sind. Um die Fördertechnik 3 und damit den Loop nicht mit den unnötig geförderten Stapel-Behältern zu belasten, kann der nicht benötigte Behälter des Stapelpaares über die Quer-Verbindungseinrichtung 9, die beispielsweise Rollenbahnen und einen 90°-Umsetzer aufweist, direkt auf die Einlagerungsbahn 6 und nur der benötigte Behälter auf den Loop zum Arbeitsplatz gefördert werden. Optional können mindestens ein "Parkplatz", also mindestens ein Stellplatz 10, angebunden werden, der genutzt wird um gewünschte Reihenfolgen von Behältern auf der Fördertechnik oder der Stapelreihenfolge (welcher Behälter ist oben oder unten) bilden zu können. Im Falle eines RBG wäre kein Heber 11 notwendig, bei OLS oder MLS wären Heber 11 einzusetzen um einen Höhenunterschied im Lagerregal 2 zu überwinden. Pufferbahnen 12 entkoppeln Fördertechnik 3 bzw. Loop und die Stapeleinrichtung 4. Die Einlagerungsbahn 6 und die Auslagerungsbahn 8 entkoppeln die Stapeleinrichtung 4 und die Heber 11 oder das Regallager 1 mit den Lagerregalen 2. Ohne Entkopplung müssten die einzelnen Komponenten ggf. aufeinander warten und/oder auf der Fördertechnik 3 mit dem oft stark ausgelasteten Loop Behälter transportiert werden.

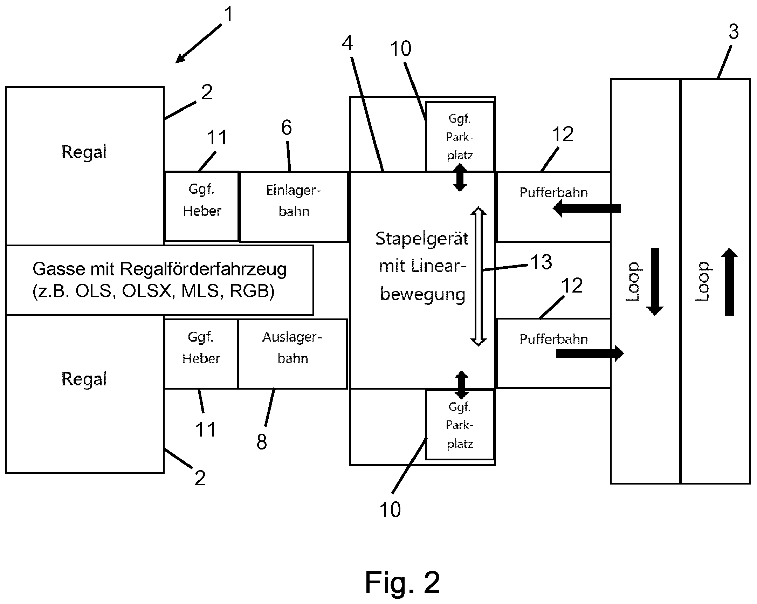

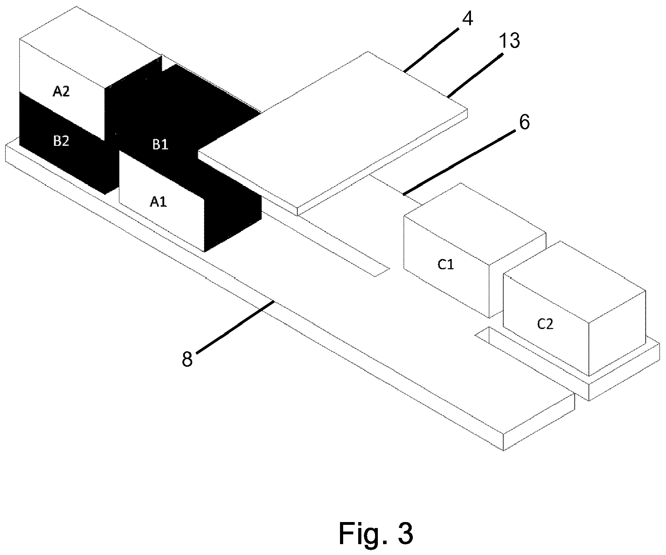

Fig. 2 zeigt in einer schematischen Draufsicht ein zweites Ausführungsbeispiel des erfindungsgemäßen Lager- und Entnahmesystems. Dabei ist die Stapeleinrichtung 4 als kombinierte Stapel/Entstapeleinheit ausgebildet, die zugleich auf der Auslagerungsbahn 8 entstapelt und auf der Einlagerungsbahn 6 stapelt, siehe hierzu auch die erläuternden Fig. 3 bis 11. Diese Stapel/Entstapeleinheit weist eine Linearbewegungseinrichtung 13 zum Bewegen von Lagergut zwischen der Einlagerungsbahn 6 und der Auslagerungsbahn 8 auf.

Grundsätzlich wird dabei ähnlich wie bei einem als Gridstore oder Blocklager ausgebildeten Lager- und Entnahmesystem von oben auf Lagergut oder Behälter gegriffen und dann passend auf einer Einlagerungsbahn 6 oder Auslagerungsbahn 8 ein Behälterpaar gebildet oder entstapelt. Dies erfordert eine Synchronisation der Arbeitsaufgaben der Stapel/Entstapeleinheit oder -station und der beiden Bahnen 6 und 8 und ist günstiger und effizienter im Vergleich zum ersten Ausführungsbeispiel, da unerwünschte Behälter nur einmal gehandhabt werden - Aufnahme des Behälters von dem Auslagerungsstapel und Abgabe auf dem Einlagerungsstapel. Die Einsparungen in Stahlbau und Peripherie sind höher als der Preis der aufwendigeren Stapeleinrichtung 4 in Form einer Stapel/Entstapeleinheit.

Optional kann auch hier ein "Parkplatz", also ein weiterer Stellplatz 10 und/oder eine Pufferbahn 12, angebunden werden, die oder der genutzt werden oder wird, um gewünschte Reihenfolgen von Behältern bilden zu können, bevor eine Übergabe auf die Fördertechnik 3 oder den Loop erfolgt. Des Weiteren können auch hier Heber 11 realisiert werden.

Eine Steuerung des Lager- und Entnahmesystems mit einem beispielhaften getakteten Ablauf eines Entstapelns und Stapelns ist in den Fig. 3 bis 11 in schematischen, perspektivischen Darstellungen gezeigt, wobei eine Synchronisation der Arbeitsaufgaben über "Takte" erfolgt.

Fig. 3 zeigt eine Ausgangssituation, wobei eine Stapeleinrichtung 4 gezeigt ist, mittels derer Lagergut auf einer Einlagerungsbahn 6 für die Zuführung zu einem hier nicht gezeigten Regallager - in den Fig. 3 bis 11 links - gestapelt werden kann. Des Weiteren kann mittels der Stapeleinrichtung 4 aus dem Regallager transportiertes Lagergut auf einer Auslagerungsbahn 8 für die Zuführung zu einer hier nicht gezeigten Fördertechnik - in den Fig. 3 bis 11 rechts - gestapelt werden. Die Stapeleinrichtung 4 weist des Weiteren eine Linearbewegungseinrichtung 13 zum Bewegen von Lagergut zwischen der Einlagerungsbahn 6 und der Auslagerungsbahn 8 auf.

Das Lagergut umfasst gemäß Fig. 3 aus dem Regallager kommende und vereinzelt auszulagernde Behälter A1 und A2, ebenfalls aus dem Regallager kommende Behälter B1 und B2, die gestapelt zurückzulagern sind, und Behälter C1 und C2 auf, die von der hier nicht gezeigten Fördertechnik - in den Fig. 3 bis 11 rechts - kommen und ebenfalls gestapelt zurückzulagern sind.

Ein Fördern von Behältern erfolgt auf der Einlagerungsbahn 6 immer in Richtung Regallager und auf der Auslagerungsbahn 8 immer in Richtung Fördertechnik.

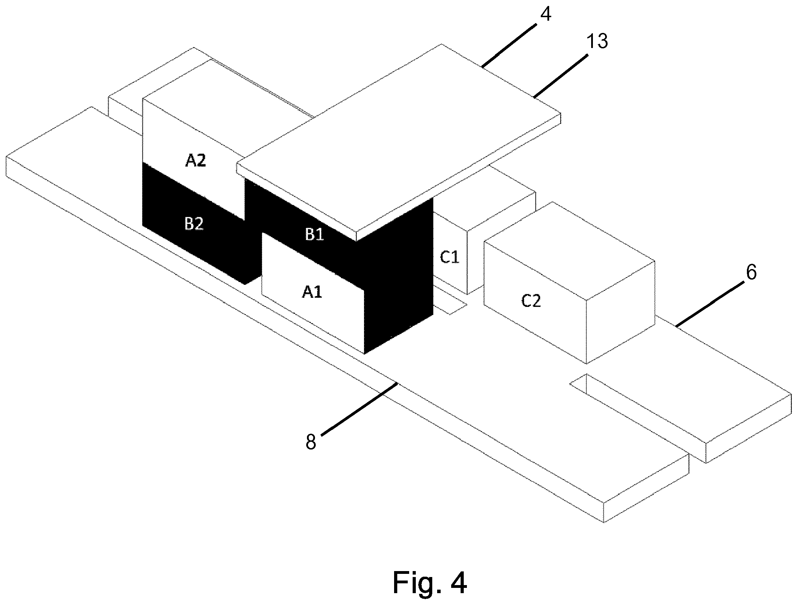

Gemäß Fig. 4 und einem 1. Takt werden die Behälter um einen Platz oder Stellplatz weiter gefördert, wobei dies auf der Einlagerungsbahn 6 und der Auslagerungsbahn 8 gleichzeitig erfolgt.

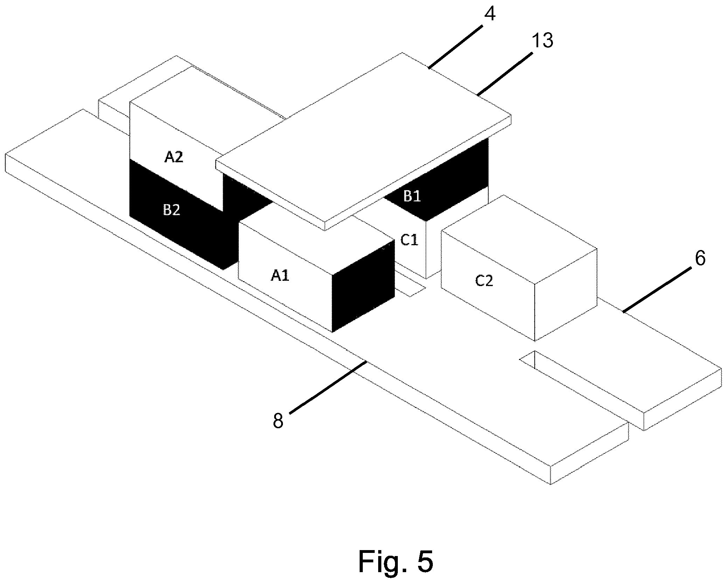

Gemäß Fig. 5 und einem 2. Takt wird der Behälter B1 von einem Auslagerungsstapel aufgenommen und auf einen Einlagerungsstapel abgegeben.

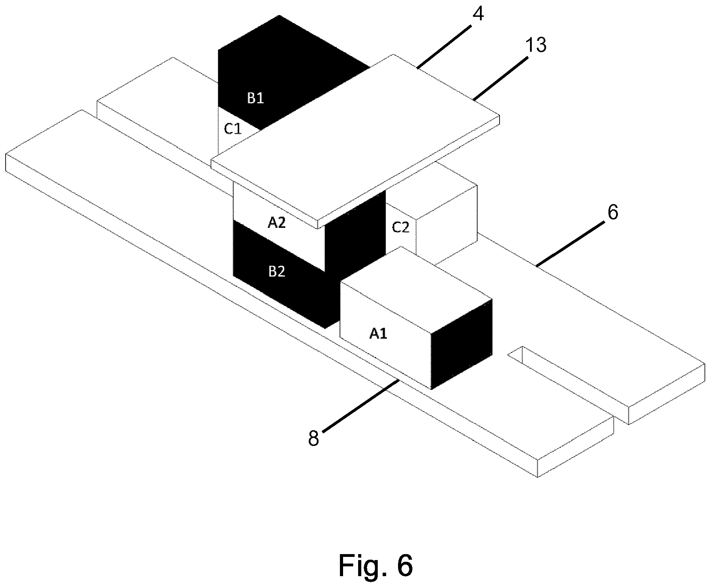

Gemäß Fig. 6 und einem 3. Takt werden die Behälter um einen Platz oder Stellplatz weiter gefördert, wobei dies auf der Einlagerungsbahn 6 und der Auslagerungsbahn 8 gleichzeitig erfolgt.

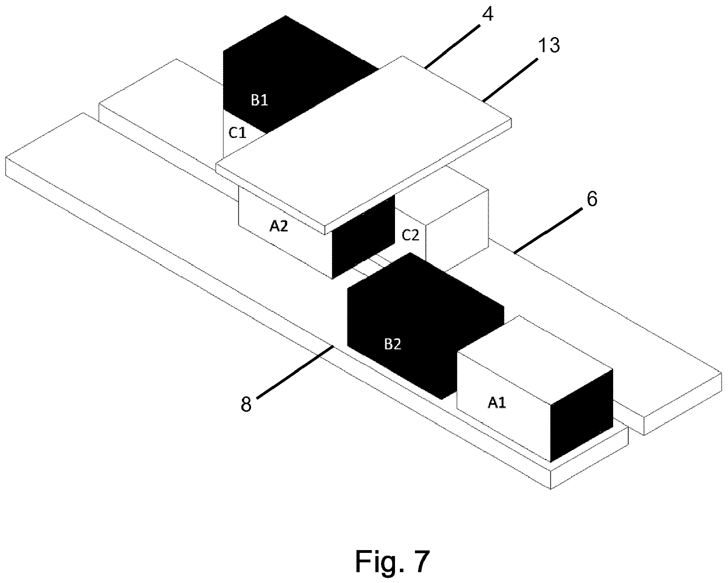

Gemäß Fig. 7 und einem 4. Takt wird der Behälter A2 gegriffen und alle anderen Behälter auf der Auslagerungsbahn 8 zu einem nächsten Stellplatz gefördert.

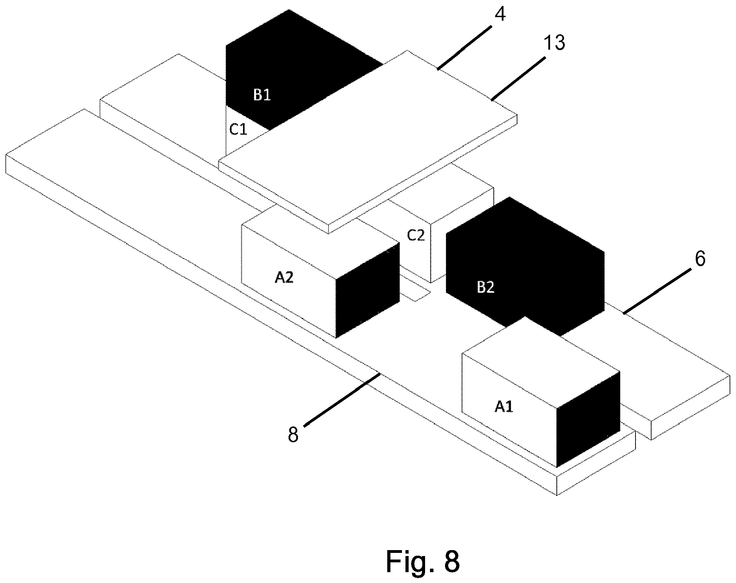

Gemäß Fig. 8 und einem 5. Takt wird in der Behälter A2 auf die Auslagerungsbahn 8 abgesetzt und wird ein wieder einzulagernder Behälter B2 mittels eines Umsetzers oder einer Linearbewegungseinrichtung auf die Einlagerungsbahn 6 gefördert.

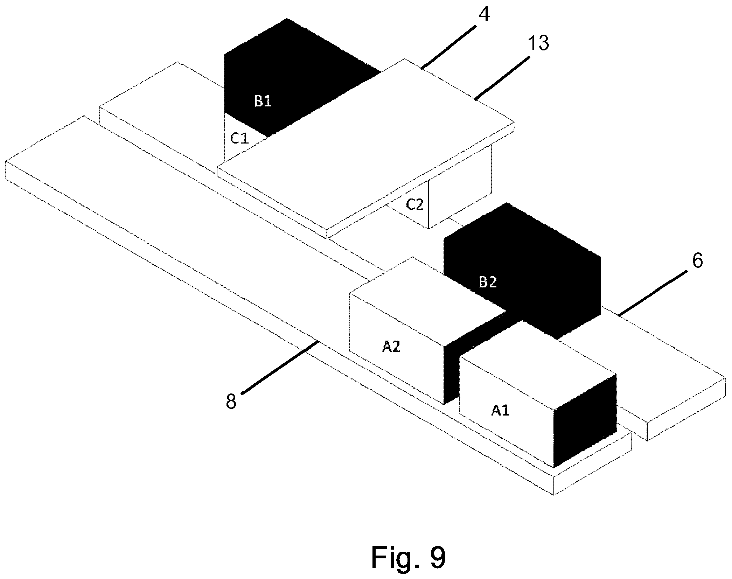

Gemäß Fig. 9 und einem 6. Takt wird auf der Auslagerungsbahn 8 der Behälter A2 zum nächsten Stellplatz gefördert und wird ein Behälter C2 von der Einlagerungsbahn 6 angehoben.

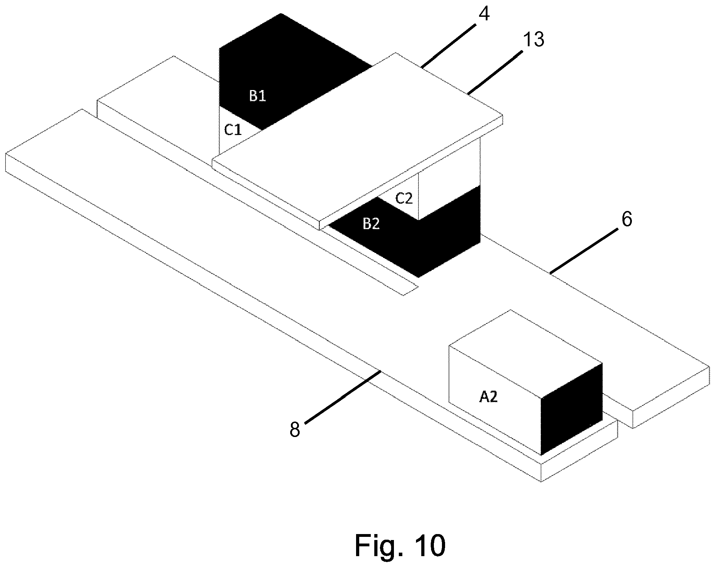

Gemäß Fig. 10 und einem 7. Takt werden auf der Auslagerungsbahn 8 die Behälter A1 und A2 und auf der Einlagerungsbahn 6 der Behälter B2 gleichzeitig zum nächsten Stellplatz gefördert.

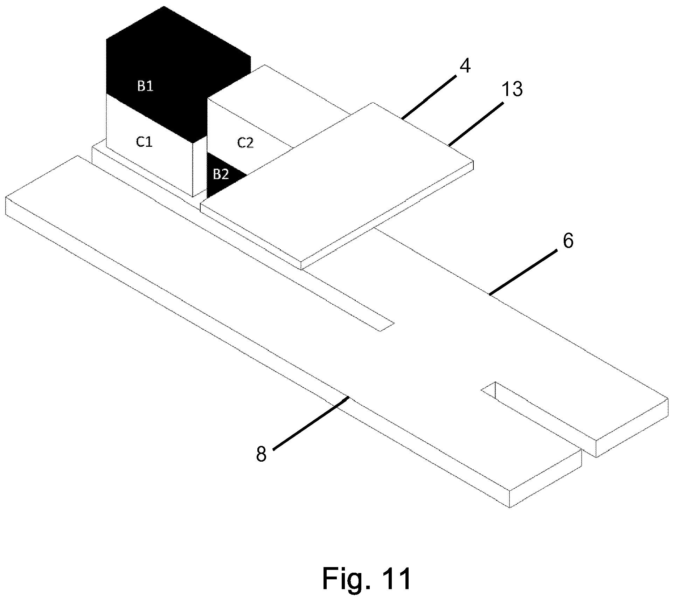

Gemäß Fig. 11 und einem 8. Takt werden schließlich sämtliche Behälter zu einem nächsten Stellplatz gefördert, wobei dies auf der Einlagerungsbahn 6 und der Auslagerungsbahn 8 gleichzeitig erfolgt. In dieser Situation stehen zwei Behälterstapel aus den Behältern B1 und C1 sowie C2 und B2 zur Einlagerung in das Regallager bereit. Die aus dem Regallager gekommenen Behälter A1 und A2 sind nach einer Vereinzelung durch die Stapeleinrichtung 4 der Fördertechnik zugeführt worden.

Hinsichtlich weiterer vorteilhafter Ausgestaltungen der erfindungsgemäßen Vorrichtung sowie des erfindungsgemäßen Verfahrens wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele lediglich zur Erörterung der beanspruchten Lehre dienen, diese jedoch nicht auf die Ausführungsbeispiele einschränken.

### Bezugszeichenliste

- 1: Regallager
- 2: Lagerregal
- 3: Fördertechnik
- 4: Stapeleinrichtung
- 5: Stapelstation
- 6: Einlagerungsbahn
- 7: Entstapelstation
- 8: Auslagerungsbahn
- 9: Quer-Verbindungseinrichtung
- 10: Stellplatz
- 11: Heber
- 12: Pufferbahn
- 13: Linearbewegungseinrichtung

## Patentansprüche

1. Lager- und Entnahmesystem mit einem Regallager (1) mit mindestens einem Lagerregal (2), mit mindestens einer Fördertechnik (3), wobei die mindestens eine Fördertechnik (3) zum Zuführen von Lagergut zu einem zwischen dem Regallager (1) und der mindestens einen Fördertechnik (3) realisierten Bereich vor dem mindestens einen Lagerregal (2) und zum Transportieren von Lagergut aus dem Bereich zu einem Bestimmungsort ausgebildet ist, und mit mindestens einer Stapeleinrichtung (4) zum Stapeln und Entstapeln von Lagergut,
**dadurch gekennzeichnet, dass** die mindestens eine Stapeleinrichtung (4) in dem Bereich vor dem mindestens einen Lagerregal (2) angeordnet ist.

2. Lager- und Entnahmesystem nach Anspruch 1, **dadurch gekennzeichnet, dass** das Lager- und Entnahmesystem eine in dem Bereich gebildete Einlagerungsbahn (6) für Lagergut und eine in dem Bereich gebildete Auslagerungsbahn (8) für Lagergut aufweist und dass die mindestens eine Stapeleinrichtung (4) zwischen oder in der Umgebung der Einlagerungsbahn (6) und der Auslagerungsbahn (8) angeordnet oder in die Einlagerungsbahn (6) und/oder in die Auslagerungsbahn (8) integriert ist.

3. Lager- und Entnahmesystem nach Anspruch 2, **dadurch gekennzeichnet, dass** die mindestens eine Stapeleinrichtung (4) zur Durchführung eines Stapelns von Lagergut auf der Einlagerungsbahn (6) und/oder eines Entstapelns von Lagergut auf der Auslagerungsbahn (8) ausgebildet ist.

4. Lager- und Entnahmesystem nach Anspruch 2 oder 3, **dadurch gekennzeichnet, dass** die mindestens eine Stapeleinrichtung (4) eine Stapelstation (5) auf der Einlagerungsbahn (6) und eine Entstapelstation (7) auf der Auslagerungsbahn (8) aufweist.

5. Lager- und Entnahmesystem nach Anspruch 4, **dadurch gekennzeichnet, dass** die Stapelstation (5) und die Entstapelstation (7) als separate Einrichtungen realisiert sind.

6. Lager- und Entnahmesystem nach einem der Ansprüche 2 bis 5, **dadurch gekennzeichnet, dass** die mindestens eine Stapeleinrichtung (4) eine Verbindungseinrichtung, vorzugsweise eine Quer-Verbindungseinrichtung (9), zwischen der Stapelstation (5) und der Entstapelstation (7) oder zwischen der Einlagerungsbahn (6) und der Auslagerungsbahn (8) aufweist.

7. Lager- und Entnahmesystem nach Anspruch 6, **dadurch gekennzeichnet, dass** die Verbindungseinrichtung ein Fördermittel, vorzugsweise mit einem 90°-Umsetzer, aufweist, wobei das Fördermittel eine Rollenbahn aufweisen kann.

8. Lager- und Entnahmesystem nach einem der Ansprüche 4 bis 7, **dadurch gekennzeichnet, dass** die Stapelstation (5) und die Entstapelstation (7) als kombinierte, insbesondere integral ausgebildete, Stapel/Entstapeleinheit realisiert sind, wobei die Stapel/Entstapeleinheit vorzugsweise eine Bewegungseinrichtung, beispielsweise Linearbewegungseinrichtung (13), zum Bewegen von Lagergut zwischen der Einlagerungsbahn (6) und der Auslagerungsbahn (8) aufweist.

9. Lager- und Entnahmesystem nach einem der Ansprüche 1 bis 8, **dadurch gekennzeichnet, dass** der mindestens einen Stapeleinrichtung (4) mindestens ein zum zwischenzeitlichen Parken eines Lagerguts dienender Stellplatz (10) für Lagergut zugeordnet ist, wobei vorzugsweise mindestens ein Stellplatz (10) für Lagergut im Bereich einer Stapelstation (5) und/oder mindestens ein Stellplatz (10) für Lagergut im Bereich einer Entstapelstation (7) realisiert sind oder ist.

10. Lager- und Entnahmesystem nach einem der Ansprüche 1 bis 9, **dadurch gekennzeichnet, dass** der mindestens einen Stapeleinrichtung (4) mindestens eine Pufferbahn (12) für Lagergut zugeordnet ist.

11. Lager- und Entnahmesystem nach einem der Ansprüche 1 bis 10, **dadurch gekennzeichnet, dass** mindestens eine Pufferbahn (12) für Lagergut zwischen der mindestens einen Stapeleinrichtung (4) und der Fördertechnik (3) realisiert ist.

12. Lager- und Entnahmesystem nach einem der Ansprüche 2 bis 11, **dadurch gekennzeichnet, dass** mindestens eine Pufferbahn (12) für Lagergut zwischen einer Einlagerungsbahn (6) und der Fördertechnik (3) und/oder mindestens eine Pufferbahn (12) für Lagergut zwischen einer Auslagerungsbahn (8) und der Fördertechnik (3) realisiert sind oder ist.

13. Lager- und Entnahmesystem nach einem der Ansprüche 1 bis 12, **dadurch gekennzeichnet, dass** die mindestens eine Stapeleinrichtung (4) zwischen einer - zwischen zwei Lagerregalen (2) und/oder vor oder neben dem mindestens einen Lagerregal (2) gebildeten - Lagergasse und der mindestens einen Fördertechnik (3), vorzugsweise vor der Lagergasse, angeordnet ist, wobei vorzugsweise die mindestens eine Stapeleinrichtung (4) zur lagergassenübergreifenden Arbeit ausgebildet ist.

14. Lager- und Entnahmesystem nach einem der Ansprüche 1 bis 13, **dadurch gekennzeichnet, dass** dem Regallager (1) ein Mittel, beispielsweise ein Regalbediengerät, eine Hebeeinrichtung (11) oder ein Shuttle, zum Einlagern und/oder Auslagern von gestapeltem oder ungestapeltem Lagergut in das mindestens eine und aus dem mindestens einen Lagerregal (2) zugeordnet ist, wobei vorzugsweise das Mittel in dem Regallager (1), in einer Lagergasse oder zwischen dem Regallager (1) und dem Bereich angeordnet ist und/oder arbeitet,
und/oder dass das Lager- und Entnahmesystem ein Mittel zur Gewichtserfassung von Lagergut oder gestapeltem Lagergut aufweist.

15. Verfahren zum Betreiben eines Lager- und Entnahmesystem nach einem der Ansprüche 1 bis 14, wobei das Lager- und Entnahmesystem ein Regallager (1) mit mindestens einem Lagerregal (2), mindestens eine Fördertechnik (3), wobei die mindestens eine Fördertechnik (3) zum Zuführen von Lagergut zu einem zwischen dem Regallager (1) und der mindestens einen Fördertechnik (3) realisierten Bereich vor dem mindestens einen Lagerregal (2) und zum Transportieren von Lagergut aus dem Bereich zu einem Bestimmungsort ausgebildet ist, und mindestens eine Stapeleinrichtung (4) zum Stapeln und Entstapeln von Lagergut aufweist,
**dadurch gekennzeichnet, dass** die mindestens eine Stapeleinrichtung (4) in dem Bereich vor dem mindestens einen Lagerregal (2) angeordnet wird, sodass ein Stapeln und Entstapeln von Lagergut in dem Bereich ermöglicht ist.
